# EUROPÄISCHE PATENTSCHRIFT

(11) **EP 1 476 870 B1**
(45) Veröffentlichungstag und Bekanntmachung des Hinweises auf die Patenterteilung: **12.08.2009**
(21) Anmeldenummer: 03706443.3
(22) Anmeldetag: 06.02.2003
(51) Int. Cl.: G11B 27/00, G11B 27/10, G11B 20/10, G11B 19/02, G10H 1/00

(54) **VORRICHTUNG UND VERFAHREN ZUR STEUERUNG VON WIEDERGABEGERÄTEN DIGITALER AUDIO- UND/ODER VIDEOINFORMATIONEN**
DEVICE AND METHOD FOR CONTROLLING PLAYBACK DEVICES FOR DIGITAL AUDIO AND/OR VIDEO INFORMATION
PROCEDE ET DISPOSITIF POUR COMMANDER DES APPAREILS DE REPRODUCTION D'INFORMATIONS D'AUDIO ET/OU DE VIDEO

(30) Priorität: 15.02.2002 DE 10206644
(43) Veröffentlichungstag der Anmeldung: 17.11.2004
(73) Patentinhaber: Native Instruments Software Synthesis GmbH, 10997 Berlin (DE)
(72) Erfinder: BECKER, Friedemann, 27711 Osterholz-Scharnbeck (DE)
(74) Vertreter: Reinstädler, Diane
(86) Internationale Anmeldenummer: PCT/EP2003/001181
(87) Internationale Veröffentlichungsnummer: WO 2003/069599

(56) Entgegenhaltungen:
- EP-A- 0 973 162
- WO-A-01/65559
- "Scratch Your Digital Audio Files from a Turntable" PRESS RELEASE, [Online] 22. Januar 2002 (2002-01-22), XP002281308 Gefunden im Internet: <URL:HTTP://NAMM.HARMONY-CENTRAL.COM/WNAMM 02/CONTENT/STANTON/PR/FINAL-SCRATCH.HTML> [gefunden am 2004-05-24]
- SCOT HACKER: "The BeOS Bible" 1999 , PEACHPIT PRESS XP002281295 Seite 751

## Beschreibung

Die Erfindung betrifft ein Wiedergabesteuergerät, insbesondere einen PC, zur Wiedergabe von digital gespeicherten Informationen, insbesondere Musikinformationen, der über herkömmliche Abspielgeräte wie Plattenspieler oder CD-Player gesteuert wird. Weitere Bestandteile der Erfindung sind Informationsträger wie CDs oder Vinyl-Schallplatten, die entsprechend segmentiert sind. Hierbei wird das analoge oder digitale Ausgangssignal des herkömmlichen Abspielgerätes vom digitalen Wiedergabegerät ausgewertet und in Steuerinformationen umgewandelt.

Aus der Druckschrift WO 01/65559 ist eine Steuerung zur Wiedergabe digitaler Audio-Daten mit Hilfe einer Vinyl-Schallplatte, die auf einem handelsüblichen Schallplattenspieler abgespielt wird, bekannt. Hierin wird ebenfalls ein Verfahren beschrieben, das es Disk Jockeys (DJs) ermöglicht, ihre auf Computern digital gespeicherte Musik mit der Hilfe von speziellen Vinyl-Schallplatten wiederzugeben (kommerzieller Name: Final Scratch). Der Vorteil dieses Verfahrens besteht darin, dass DJs in dem oftmals recht beengten und lichtarmen Arbeitsumfeld mit den gewohnten, robusten Plattenspielern arbeiten können, ohne dabei die Wiedergabe der digitalen Musikstücke über unübersichtliche Computertastaturen steuern zu müssen, sondern diese mit ihren gewohnten Bewegungsabläufen auf dem Schallplattenspieler steuern können.

Aus der Druckschrift US 2001/0011497 ist eine Vorrichtung bekannt, die in Abhängigkeit der Rotation eines Knopfes die Musikwiedergabe steuert.

Wie der Anmeldung entnommen werden kann, ist es lediglich möglich, die Geschwindigkeiten und die Abspiel-Position der digitalen Wiedergabe durch die Vinyl-Schallplatte zu steuern.

Nachteil des oben beschriebenen Verfahrens ist, dass es keine Lösung anbietet, auch die Auswahl der Musikstücke aus dem auf der Festplatte gespeicherten Archiv oder andere den Klang beeinflussende Parameter des Wiedergabe-Gerätes zu steuern. Hierzu muss nach wie vor die Tastatur des Computers oder ein anderes Eingabegerät (z. B. die Maus) verwendet werden.

Aufgabe der vorliegenden Erfindung ist, diese Einschränkung aufzuheben und ein Verfahren und eine Vorrichtung bereitzustellen, die individuell genutzt werden können, um dem DJ unterschiedliche über die reine Wiedergabe hinaus reichende Bedien-Funktionen bereitzustellen.

Diese Aufgabe wird durch die Erfindungen gemäß den Merkmalen der unabhängigen Ansprüche gelöst. Vorteilhafte Weiterbildungen der Erfindungen sind in den Unteransprüchen gekennzeichnet.

Im Wesentlichen erfolgt in dem beschriebenen Verfahren eine Segmentierung des analogen oder digitalen Informationsträgers durch dessen Unterteilung in verschiedene Bereiche, die mit Grundfunktionen des verwendeten Abspielgerätes übersichtlich angesteuert werden können. Der Anwender bestimmt durch die Wahl eines Bereiches, welchen Parameter des angeschlossenen digitalen Wiedergabegerätes (Computer/Software) er steuern möchte. Durch die Positionierung der Abspielposition innerhalb des gewählten Bereiches steuert er den gewählten Parameter. Somit stellt die Oberfläche des Informationsträgers eine Steueroberfläche dar.

Grundsätzlich sind digitale Informationsträger und analoge Informationsträger zu berücksichtigen.

In einer Ausführung des beschriebenen Verfahrens werden auf einer Vinyl-Schallplatte ringförmige Bereiche vorzugsweise optisch auf der Oberfläche gekennzeichnet. Der DJ wählt den mit dem Verfahren zu steuernden Parameter des digitalen Wiedergabegerätes aus, indem er den Tonabnehmer mit der Hand in einen der Bereiche setzt. Zur Steuerung des ausgewählten Parameters wird die Vinyl-Schallplatte vorzugsweise mit der Hand vor- und zurückbewegt.

In einer weiteren Ausführung werden die ringförmigen Bereiche ihrerseits optisch in radiale Sektoren unterteilt. Bei dieser Ausführung erfolgt die Veränderung des ausgewählten Parameters des digitalen Wiedergabegerätes nicht kontinuierlich, sondern jeweils nur bei Überqueren einer der optisch sichtbaren radialen Markierungen.

In einer weiteren Ausführung wird ein digitaler Informationsträger, beispielsweise eine Audio CD, derart formatiert, dass die den zu steuernden Parametern zugeordneten Bereiche durch Track-Sprungmarken gekennzeichnet werden. Die Auswahl des Wiedergabe-Bereiches und damit des zu steuernden Parameters erfolgt hierbei durch die herkömmlichen Track-Auswahl-Tasten des Abspielgerätes.

Das hier beschriebene Verfahren bietet eine Lösung der Problemstellung, indem es das vom Datenträger und dem dazugehörenden Abspielgerät erzeugte Signal dazu verwendet, eine Vielzahl von Parametern und Funktionen des vorzugsweise digitalen WiedergabeGerätes anzusteuern.

Kombiniert man dieses Verfahren im Falle der Vinyl-Scheibe mit dem in Druckschrift WO 01/65559 beschriebenen Wiedergabe-Verfahren, besteht der Vorteil darin, dass ein DJ den gesamten Arbeitsvorgang des Mischens digitaler Musikstücke mit dem Schallplattenspieler durchführen kann. Zur Auswahl eines neuen Musiktitels muss er lediglich den Tonabnehmer in den entsprechenden Steuerbereich der Schallplatte setzen, die Platte innerhalb dieses Bereichs vorzugsweise manuell vor- oder zurückdrehen bis der gewünschte Titel angezeigt und geladen wird und dann den Tonabnehmer wieder in den Wiedergabeteil der Schallplatte zurücksetzen, um den Titel zu spielen. Das präzise manuelle Setzen des Tonabnehmers in bestimmte Bereiche der Schallplatte sowie das manuelle Vor- oder Zurückdrehen derselben gehört zum Grundhandwerk des DJ's und stellt somit für diesen ein ideales Eingabe-Verfahren dar.

Aus dem Stand der Technik ist lediglich ein Verfahren bekannt, dass es Disk Jockeys ermöglicht, ihre auf Computern digital gespeicherte Musik mit der Hilfe von speziellen Vinylscheiben wiederzugeben. Die Verwendung von digitalen Medien wurde hingegen nicht offenbart. In den letzten Jahren hat sich parallel zur Kunst des Vinyl-Auflegens auch das Djing mittels CD-Playern etabliert. Es existieren sehr ausgereifte Geräte, die stufenlose Steuerung der Geschwindigkeit, Anspringen von markierten Punkten, die Wiedergabe von Audio-Schleifen (Loops) sowie das so genannte Scratchen (manuelles Vorund Zurückbewegen der Wiedergabeposition) ermöglichen.

Die heutigen DJ-CD-Player stellen somit komplexe Wiedergabe-Steuereinheiten dar, um indirekt die Wiedergabe digitaler AudioDateien zu steuern. Das beschriebene Verfahren kann somit von der Vinyl-Platte auf die digitale Platte übertragen werden.

Für den digitalen Bereich ist also weiterhin Bestandteil der Erfindung ein digitales Speichermedium für Audio- oder Videodaten, insbesondere eine CD, DVD, Minidisc, die eine Codierung aufweist, die beim Abspielen auf einem Abspielgerät anhand der wiedergegebenen Informationen am analogen oder digitalen Ausgang des Abspielgerätes die Information über Wiedergabe-Position und -Geschwindigkeit für ein externes digitales Wiedergabe-Gerät (Computer) zur Wiedergabe von vorzugsweise auf einer Festplatte gespeicherten digitalen AudioDateien enthält.

Für den digitalen Bereich ist weiterhin Bestandteil der Erfindung ein digitales Speichermedium für Audio- oder Videodaten, insbesondere eine CD, DVD, Minidisc, die eine Codierung aufweist, die beim Abspielen auf einem Abspielgerät anhand der wiedergegebenen Informationen am analogen oder digitalen Ausgang des Abspielgerätes eine Bestimmung der durch den Benutzer ausgewählten Funktionen, insbesondere der am Abspielgerät betätigten Tasten, erlaubt.

Das hier beschriebene Verfahren ordnet die Bedienvorgänge am Abspielgerät Funktionen des digitalen Wiedergabegerätes zu. Vorzugsweise ist dadurch eine Auswahl von Elementen aus einer Liste, insbesondere einem Musikarchiv, oder eine Bestimmung von Sprungmarken oder die Steuerung von Softwaremodulen oder die Länge von Audio-Schleifen oder eine kontinuierliche Veränderung von Parametern, insbesondere Audio-Effekt-Parametern wie Lautstärke, Filter, Flanger, Echo, Delay, oder eine Wiedergabesteuerung von Video-Sequenzen oder Parametern von Video-Sequenzen, insbesondere Farbigkeit, Auflösung, oder Parameter und Positionierung von Objekten in Computerspielen möglich.

Dadurch können insbesondere große Archive von Musikinformationen auf der Festplatte (oder anderen Speichermedien) des digitalen Wiedergabegeräts (Computer) mittels gewöhnlicher Bedienvorgänge am CD-Player angesteuert und vorzugsweise durchsucht werden.

Dank der hohen Speicherkapazitäten heutiger Festplatten und der Kompressionsverfahren für Audiodateien (MP3) sowie der umfangreichen Archivierungsfunktionen, die auf Computern zur Verfügung stehen, stellt dieses Verfahren einen Vorteil gegenüber der konventionellen Nutzung des CD-Players dar. Die Begrenzung auf Musiktitel der eingelegten Audio-CD entfällt somit.

Musiktitel müssen nicht mehr auf eine Vielzahl von CDs gebrannt werden, sondern können komfortabel direkt von der Festplatte aufgerufen und mit sämtlichen Parametern, die am CD-Player zur Verfügung stehen, abgespielt werden.

In einer weiteren Ausführungsform - entsprechend der Vor- und Zurückbewegung der Vinyl-Schallplatte - werden zur FunktionsSteuerung Vor- und Zurückbewegungen innerhalb des ausgewählten Tracks des digitalen Informationsträgers verwendet. Dies wird durch den auf vielen professionellen CD Playern verfügbaren "Such-Modus" ermöglicht, welcher die gewöhnliche Wiedergabe der Audio-CD stoppt und die aktuelle Wiedergabeposition als immer wiederkehrende Audio-Schleife kontinuierlich wiedergibt. Über die Vor- und Zurück-Tasten oder die auf vielen CD-Playern übliche Drehscheibe (Jogg-Wheel) kann in diesem Such-Modus manuell langsam durch den Track gefahren werden. Das angeschlossene digitale Wiedergabegerät wertet die gerade als Schleife wiedergegeben Position aus und steuert den dem Track zugehörigen Parameter entsprechend an.

Ein weiterer Vorteil des Verfahrens besteht in seiner Unabhängigkeit vom verwendeten CD-Player. Da eine bestimmte Codierung (Zeitcodes, Sprungmarken/Tracks) als Information auf der speziellen CD gespeichert ist, kann jeder CD-Player für das Verfahren genutzt werden und es stehen genau die Funktionen zur Verfügung, die dieser CD-Player auch für gewöhnliche Audio-CDs bietet.

Ein wesentlicher Bestandteil der vorliegenden Erfindung ist ein Wiedergabesteuergerät zur Wiedergabe von digital gespeicherten Informationen, insbesondere Musikinformationen. Hierbei handelt es sich vorzugsweise um einen handelsüblichen PC, der über eine Soundkarte verfügt. Dieser Computer hat entweder unmittelbar oder über ein Netzwerk Zugriff auf die digital gespeicherten Informationen, insbesondere Musikinformationen. Die Soundkarte dient im Eingangsweg in der Regel als Schnittstellenmittel, das eine Verbindung zu einem steuerbaren Audio- oder Videodatenwiedergabegerät, insbesondere Plattenspieler, CD-Player, DVD-Player oder MINI-Discplayer erlaubt. Auf dem Computer läuft ein Programm ab, das einen Speicherbereich verwaltet, in dem Muster abgelegt sind, die mit Funktions-Aufrufen des Wiedergabesteuergerätes individuell verknüpfbar sind. Durch die individuelle Verknüpfbarkeit besteht die Möglichkeit, dass - der Benutzer das Funktionsprofil eigenständig festlegt. Dies gilt sowohl für digitale als auch für analoge Informationsträger.

Weiterhin umfasst der Rechner Mittel zum Vergleichen der Muster mit Informationen von den steuerbaren Audio- oder Videodatenwiedergabegeräten, wobei bei einem Erkennen eines Musters die zugeordnete Funktion ausgeführt wird.

Ein wesentlicher Punkt der Erfindung ist auch bei digitalen Medien eine Steuerung über die Wiedergabegeschwindigkeit hinaus. Die Formen der Steuerung sind oben beschrieben. Es wird darauf hingewiesen, dass ebenfalls analoge Medien zur Steuerung eingesetzt werden können.

Für den digitalen Bereich ist weiterhin Bestandteil der Erfindung ein digitales Speichermedium für Audio- oder Videodaten, insbesondere eine CD, DVD, Minidisc, die eine spezielle Codierung aufweist, die beim Abspielen auf einem Abspielgerät anhand der wiedergegebenen Informationen am analogen oder digitalen Ausgang des Abspielgerätes eine Bestimmung der durch den Benutzer ausgewählten Funktionen, insbesondere der gedrückten Tasten, erlaubt. Um dies zu erreichen, werden unterschiedlich codierte Tracks zur Erkennung verwendet.

Bei Schallplatten, insbesondere Vinylplatten, werden vorzugsweise optisch hervorgehobene Segmente durch Steuerinformationen bereitgestellt. Diese Segmente können sowohl Ringe als auch radiale Segmente sein. Detaillierte Beispiele befinden sich unten. Die einzelnen Segmente werden anhand ihrer Codieruhgen durch das Wiedergabegerät erkannt. Die Codierung erfolgt durch bekannte Modulationsverfahren, welche die Codierung in Form eines Audiosignals auf die Schallplatte überträgt. Diese Codierungen können z. B. Zeitinformationen sein. Alternativen mit unterschiedlichen Frequenzbereichen sind jedoch ebenfalls vorstellbar. Hierdurch ist es möglich, Segmente anhand von Informationen zu bestimmen, die durch einen Tonabnehmer lesbar sind und die eine eindeutige Bestimmung eines Segments zulassen, von dem der Tonabnehmer die Informationen liest.

Zur Ansteuerung des Tonabnehmers sind die Segmente der Platte farblich hervorgehoben, so dass sie insbesondere bei Dunkelheit gut erkennbar sind. Die farbliche Hervorhebung hat insbesondere dann besondere Wirkung, wenn sie fluoreszierend ist.

Ein weiterer Bestandteil der vorliegenden Erfindung ist ein Verfahren zur Steuerung eines Wiedergabesteuergerätes, insbesondere eines PCs, wobei das Wiedergabesteuergerät Schnittstellenmittel umfasst, die eine Verbindung zu einem steuerbaren Audio- und/oder Videodatenwiedergabegerät, insbesondere Plattenspieler, CD-Player, DVD-Player und/oder MINI-Discplayer erlauben. In einem ersten Initialisierungsschritt werden in einen Speicherbereich Informationsmuster abgelegt, die mit Funktionen des Wiedergabesteuergerätes verknüpft sind. Anhand dieser Referenzmuster ist es möglich, die von der Quelle gesandten Informationen zu erkennen.

In einem weiteren Überwachungsschritt werden Informationen von den steuerbaren Audio- oder Videodatenabspielgeräten kontinuierlich gelesen, um sie mit den Mustern zu vergleichen, die im Speicherbereich abgelegt sind. Beim Erkennen eines Musters wird die zugeordnete Funktion ausgeführt.

In einer bevorzugten Ausführungsform können die Funktionen den Mustern individuell zugeordnet werden. Somit hat ein DJ alle Möglichkeiten, den Computer zu steuern, indem er die Vinylplatten oder CDs steuert.

Die Funktionen wurden bereits oben im Detail ausgeführt. Es handelt sich insbesondere um Funktionen, die über die Wiedergabegeschwindigkeit hinaus die erfindungsgemäße Vorrichtung steuern.

Ein weiterer Bestandteil der Erfindung ist eine Software, die das beschriebene Verfahren auf einem PC realisiert.

Im Folgenden wird die Erfindung anhand von Ausführungsbeispielen näher erläutert, die in den Figuren schematisch dargestellt sind. Gleiche Bezugsziffern in den einzelnen Figuren bezeichnen dabei gleiche Elemente. Im Einzelnen zeigt:
- Fig. 1: den Aufbau eines digitalen Speichermediums mit zwei Tracks, wobei der erste Track mit Zeitinformationen versehen ist, um die Wiedergabe-Geschwindigkeit und - Position zu steuern und der zweite Track durch eine Sprungmarke angesprungen werden kann und für die Steuerung eines Parameters verwendet wird;
- Fig. 2: den Aufbau eines digitalen Speichermediums mit drei Tracks, die jeweils unterschiedliche unterscheidbare Zeitinformationen aufweisen, um durch das Springen von einem Track zum anderen eine Auswahlfunktion des angeschlossenen Wiedergabegerätes anzusteuern;
- Fig. 3: den Aufbau einer Vinylplatte mit unterschiedlichen Sektoren und Ringen, die optisch unterschiedlich dargestellt sind, wobei der Tonabnehmer manuell in einen anderen Bereich gesetzt werden kann, um dann die Schallplatte manuell vor- oder zurückzubewegen, um die Parameter des digitalen Wiedergabegerätes zu steuern;
- Fig. 4: den schematischen Aufbau der vorliegenden Erfindung anhand der Ausführung mit handelsüblichem CD-Player als Steuergerät.

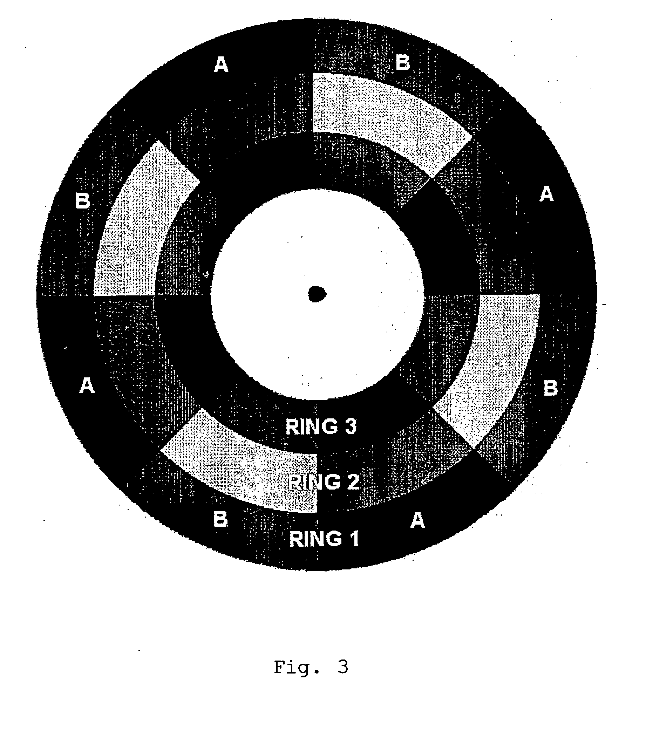

Es zeigt Figur 3 den möglichen Aufbau einer Vinylplatte. So kann beispielsweise RING 2 die Auswahl der Musiktitel aus einer Liste steuern. Das angeschlossene Gerät erkennt den gewählten Ring anhand der ersten übertragenen Daten. Bewegt der Anwender nun die Schallplatte manuell vor oder zurück, interpretiert das angeschlossene Gerät den dadurch entstehenden Datenstrom und verändert den Parameter entsprechend. Folgende Möglichkeiten der Steuerung seien beispielhaft beschrieben. So unterscheidet man eine absolute und eine relative Steuerung.

Im Folgenden wird eine absolute Steuerung betrachtet. Die Bereiche A/B sind farbig auf der Scheibe markiert und entsprechen verschiedenen Zuständen des gewählten Parameters. Es können auf einem Ring vorzugsweise 8-32 solcher Bereiche definiert werden. Der Parameter des Gerätes wird auf den gewünschten Wert eingestellt, indem die Schallplatte so gedreht wird, dass der Tonabnehmer in dem entsprechenden Bereich steht.

Bei einer relativen Steuerung wird der Parameter jeweils auf den nächsten zulässigen Wert hoch- oder heruntergesetzt, wenn der Tonabnehmers eine Grenzlinie zwischen einem A- und einem B-Bereich überfährt. Dies funktioniert vorwärts sowie rückwärts. Mit entsprechenden Zeitcodierungen kann die Richtung bestimmt werden. Dies erleichtert die Beurteilung der Drehrichtung enorm. Das Überschreiten von Grenzen kann jedoch auch zur Bestimmung der Richtung herangezogen werden. In diesem Modus funktioniert die Schallplatte wie üblicherweise eine Eingabe-Drehscheibe (Jogg-Wheel).

In einem weiteren Modus können andere Codierungen vorgenommen werden. Komplexe Bewegungsmuster, die mit der Schallplatte ausgeführt werden, können vom angeschlossenen Gerät ausgewertet und einem Parameter oder dem Wert eines Parameters zugeordnet werden. Beispiele hierfür sind:
- Vor und Zurück innerhalb einer Sekunde
- Vor und Stopp innerhalb einer Sekunde
- Zurück und Stopp innerhalb einer Sekunde

Die Kombinationsmöglichkeiten sind hierbei unbegrenzt. Durch die variable Zuordnung können die oben genannten Funktionen jederzeit implementiert werden.

Die Vorgehensweise bei digitalen Platten hängt von der Ausführung des verwendeten CD-Abspielgerätes ab. Bei einfachen Geräten kann eine Steuerung lediglich durch die Tasten des Abspielsystems erfolgen.

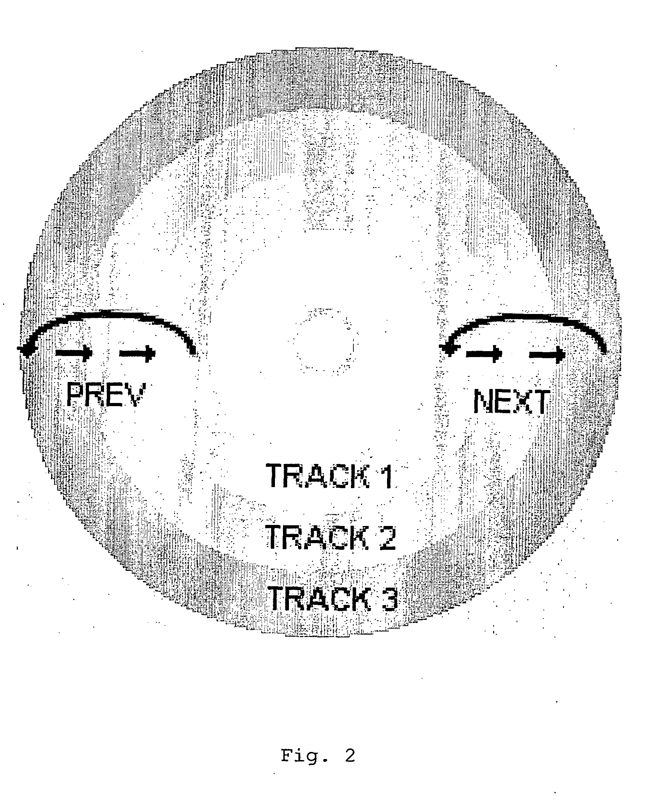

In einer ersten Ausführungsform, die in Fig. 2 beschrieben wird, sind mindestens drei Tracks notwendig. Um die auf jedem handelsüblichen CD-Player vorhandenen Tasten für die Auswahl des nächsten/letzten Tracks zu nutzen, werden 3 Tracks auf die spezielle CD gebrannt, die sich in den verwendeten Codes voneinander unterscheiden. Das angeschlossene Wiedergabegerät kann dann die Funktion des Weiterschaltens zum nächsten/letzten Titel korrekt auswerten und den nächsten bzw. letzten Musiktitel aus dem digitalen Musikarchiv in die Wiedergabe-Einheit laden.

Hierbei registriert das Wiedergabesteuergerät bei Betätigung der "NEXT Track"-Taste auf dem CD-Player einen Sprung des empfangenen Codes in der Sequenz: TRACK 1 -> TRACK 2 -> TRACK 3 -> TRACK 1 -> ..., die aufgrund der Codierung eindeutig ausgewertet werden können, um den nächsten Track aus dem digitalen Musikarchiv zu laden. Der Track, der durch das Betätigen der NEXT-Taste ausgewählt wird, ist in einer vorteilhaften Ausführungsform in der Lage, die Wiedergabe des Titels zu steuern. Diese Steuerung wird dadurch erreicht, dass Zeitinformationen oder Zählinformationen abgelegt werden. Ein Hochzählen ist denkbar. Für den Anwender besteht kein Unterschied in der Bedienung des CD-Players mit der Ausnahme, dass die angezeigte TRACK-Nummer in obigem Bespiel nur die Werte 1, 2 oder 3 annehmen kann, während im digitalen Musikarchiv beliebig viele Titel abgespeichert werden können. Hierbei ist jeder der Tracks auch gleichzeitig Wiedergabe-Steuer-Track.

Für das Betätigen der PREV-Taste (letzter Track) verhält sich die Erfindung umgekehrt, und die Wiedergabe-Einheit wird dazu veranlasst, den jeweils vorigen Track aus dem Archiv zu laden.

Komplexere CD-Abspielgeräte sind heutzutage mit einer (bereits zuvor beschriebenen) Suchfunktion und Eingabe-Drehscheiben ausgestattet, die eine manuelle Bedienung der Wiedergabe ermöglichen, die derjenigen von Schallplattenspielern sehr nahe kommt.

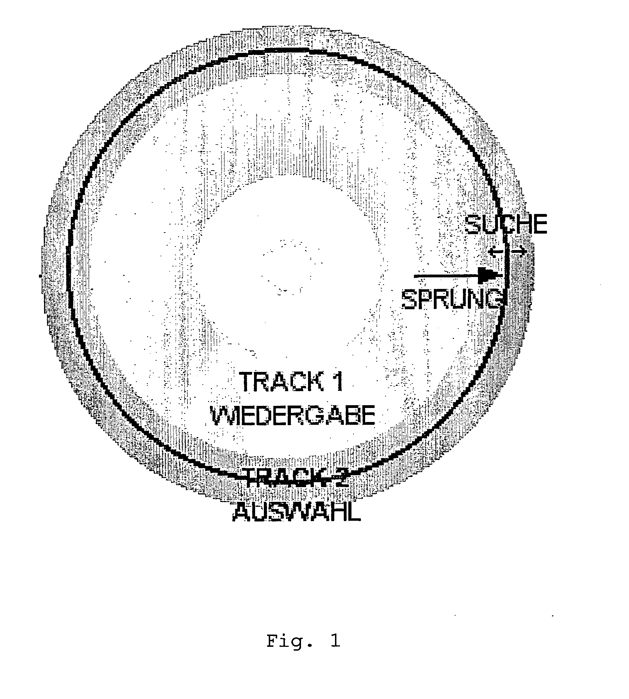

In Figur 1 wird eine weitere Ausführungsform beschrieben, die für solche professionellen CD-Abspielgeräte geeignet ist.

Die Such-Funktion veranlasst den CD-Player, die aktuelle Wiedergabeposition in einer extrem kurzen Audio-Schleife von wenigen Zehntel-Sekunden wiederholt wiederzugeben. Üblicherweise wird diese Funktion verwendet, um Punkte auf der Audio-CD mittels der Vor- und Zurück-Tasten bzw. der Eingabe-Drehscheibe genau anzufahren und dort eine Markierung zu setzen.

Wird nun neben den Wiedergabe-Steuer-Track ein zweiter Track auf die CD gebrannt, der einen vom Wiedergabegerät erkennbaren Steuercode enthält, kann eine Bewegung der Wiedergabeposition innerhalb dieses Tracks vom Wiedergabegerät als Parameter-Veränderung, beispielsweise als Auswahl des nächsten oder letzten Titels aus dem Archiv, interpretiert werden. Die Sprungmarke auf der CD, die den TRACK 2 markiert, liegt hierbei in der Mitte des der Titelauswahl zugeordneten Code-Bereichs, damit sowohl Vorwärts- als auch Rückwärtssuche möglich sind.

Ist der gewünschte Titel gefunden, springt man wieder in den Wiedergabe-Steuer-Track und kann mit der Wiedergabe des ausgewählten Titels beginnen.

Die oben genannten Funktionen sind nur exemplarisch zu verstehen. Vielmehr können durch diese Steuerung Musikarchive (Playlist), Sprungmarken (Cue Punkte), Module (bei modularer Software/Hardware), Längen von Audio-Schleifen, kontinuierliche Veränderung von Parametern, Audio-Effekt-Parameter (z. B. Lautstärke, Filter, Flanger, Echo, Delay etc.), Wiedergabesteuerung von Video-Sequenzen, Parameter von Video-Sequenzen (z. B. Farbigkeit, Auflösung, etc.), Parameter und Positionierung von Objekten in Computerspielen gesteuert werden.

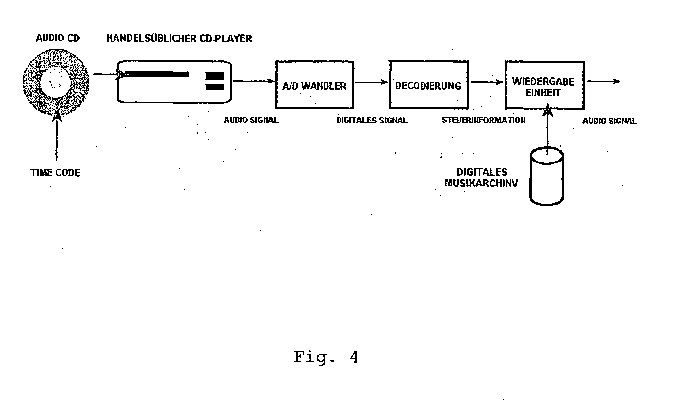

Figur 4 zeigt beispielhaft anhand des Verfahrens für einen handelsüblichen CD-Player ein System, wie es im Anspruch 1 beschrieben wird. Die einzelnen Komponenten sind selbstsprechend. Die Wiedergabeeinheit stellt die Wiedergabesteuerung dar.

### Liste der zitierten Literatur:

WO 01/65559
US 2001/0011497

## Patentansprüche

1. Vorrichtung zur Wiedergabe von digital gespeicherten Audio- und/oder Videoinformationen,
- mit einem steuerbaren Plattenspieler, der einen Tonkopf aufweist,
- mit einer Platte, die auf dem Plattenspieler abspielbar ist und die Informationen so codiert, dass anhand der durch den Tonkopf gelesenen Informationen ein Segment auf der Platte bestimmbar ist, über dem sich der Tonkopf befindet,
- mit einem Wiedergabesteuergerät, insbesondere einem PC, das mit dem Plattenspieler verbunden ist und
das Mittel zum Decodieren der Informationen zur Bestimmung der Segmente umfasst, und
das Zugriff auf die digital gespeicherten Audio- und/oder Videoinformationen hat,
wobei Funktionen des Wiedergabesteuergeräts zur Steuerung der Wiedergabe der digital gespeicherten Audio- und/oder Videoinformationen anhand der decodierten Segmente ausführbar sind.

2. Vorrichtung nach dem vorhergehenden Anspruch, **gekennzeichnet durch** eine Steuerung eines Wiedergabegeschwindigkeitsmoduls, eine Musikarchivauswahlsteuereinheit und/oder eine Programmiereinheit zur Verwaltung von Sprungmarken und/oder ein Lademodul für Softwaremodule und/oder eine Verwaltungseinheit für die Bestimmung der Länge von Audio-Schleifen und/oder ein Parametersteuerungsmodul für eine kontinuierliche Veränderung von Parametern, insbesondere Audio-Effekt-Parametern wie Lautstärke, Filter, Flanger, Echo, Delay, und/oder eine Wiedergabesteuerung von Video-Sequenzen und/oder Parametern von Video-Sequenzen, insbesondere Farbigkeit, Auflösung, und/oder eine Parametersteuerungseinheit für die Positionierung von Objekten in Computerspielen.

3. Vorrichtung nach einem oder mehreren der vorhergehenden Ansprüche, **dadurch gekennzeichnet, dass** die Steuerung des Wiedergabesteuergerätes individuell durch Zuordnung von Funktionen zu Segmenten anpassbar ist.

4. Wiedergabesteuergerät zur Wiedergabe von digital gespeicherten Audio- und/oder Videoinformationen,
- mit Mitteln, die einen Zugriff auf die digital gespeicherten Audio- und/oder Videoinformationen erlauben,
- mit Schnittstellenmitteln, die eine Verbindung zu einem steuerbaren Audio- und/oder Videodatenwiedergabegerät, insbesondere Plattenspieler, CD-Player, DVD-Player und/oder MINI-Discplayer erlauben, auf dem spezielle mit Informationsmustern versehene Platten abgespielt werden,
- mit einem Speicherbereich, in dem Muster abgelegt sind, die mit Funktionen des Wiedergabesteuergerätes individuell verknüpfbar sind,
wobei die Funktionen der Steuerung der Wiedergabe der digital gespeicherten Audio- und/oder Videoinformationen dienen,
- mit Mitteln zum Vergleichen der Muster mit Informationen von den steuerbaren Audio- und/oder Videodatenwiedergabegeräten, wobei bei einem Erkennen eines Musters die zugeordnete Funktion ausgeführt wird.

5. Wiedergabesteuergerät nach dem vorhergehenden Anspruch, **gekennzeichnet durch** eine Steuerung eines Wiedergabegeschwindigkeitsmoduls, eine Musikarchivauswahlsteuereinheit und/oder eine Programmiereinheit zur Verwaltung von Sprungmarken und/oder ein Lademodul für Softwaremodule und/oder eine Verwaltungseinheit für die Bestimmung der Länge von Audio-Schleifen und/oder ein Parametersteuerungsmodul für eine kontinuierliche Veränderung von Parametern, insbesondere Audio-Effekt-Parametern wie Lautstärke, Filter, Flanger, Echo, Delay, und/oder eine Wiedergabesteuerung von Video-Sequenzen und/oder Parametern von Video-Sequenzen, insbesondere Farbigkeit, Auflösung, und/oder eine Parametersteuerungseinheit für die Positionierung von Objekten in Computerspielen.

6. Wiedergabesteuergerät nach einem oder mehreren der vorhergehenden Wiedergabegerätansprüche, **dadurch gekennzeichnet, dass** ein PC mit einer Schnittstelle zur Verbindungsaufnahme programmtechnisch so eingerichtet ist, dass er die beanspruchte Funktionalität aufweist.

7. Verfahren zur Steuerung eines Wiedergabesteuergerätes, insbesondere eines PC, wobei das Wiedergabesteuergerät Schnittstellenmittel umfasst, die eine Verbindung zu einem steuerbaren Audio- und/oder Videodatenwiedergabegerät, insbesondere Plattenspieler, CD-Player, DVD-Player und/oder MINI-Discplayer erlauben, bei dem
- in einem Initialisierungsschritt in einem Speicherbereich Informationsmuster abgelegt sind, die mit Funktionen des Wiedergabesteuergerätes zur Steuerung der Wiedergabe von digital gespeicherten Audio- und/oder Videoinformationen verknüpft sind,
- in einem weiteren Überwachungsschritt Informationen von den steuerbaren Audio- und/oder Videodatenwiedergabegeräten kontinuierlich gelesen werden, um sie mit den Mustern zu vergleichen, wobei bei einem Erkennen eines Muster die zugeordnete Funktion ausgeführt wird.

8. Verfahren nach dem vorhergehenden Verfahrensanspruch, **dadurch gekennzeichnet, dass** die Funktionen den Mustern individuell zugeordnet werden können.

9. Verfahren nach einem oder mehreren der vorhergehenden Verfahrensansprüche, **dadurch gekennzeichnet, dass** Funktionen vorhanden sind, die einen Zugriff auf digital gespeicherte Informationen, insbesondere Musikinformationen, ermöglichen.

10. Verfahren nach einem oder mehreren der vorhergehenden Verfahrensansprüche, **dadurch gekennzeichnet, dass** ein Wiedergabegeschwindigkeitsmodul, eine Musikarchivauswahlsteuereinheit und/oder eine Programmiereinheit zur Verwaltung von Sprungmarken und/oder ein Lademodul für Softwaremodule und/oder eine Verwaltungseinheit für die Bestimmung der Länge von Audio-Schleifen und/oder ein Parametersteuerungsmodul für eine kontinuierliche Veränderung von Parametern, insbesondere Audio-Effekt-Parametern wie Lautstärke, Filter, Flanger, Echo, Delay, und/oder eine Wiedergabesteuerung von Video-Sequenzen und/oder Parametern von Video-Sequenzen, insbesondere Farbigkeit, Auflösung, und/oder eine Parametersteuerungseinheit für die Positionierung von Objekten in Computerspielen gesteuert wird.

11. Software, **dadurch gekennzeichnet, dass** sie das Verfahren nach einem oder mehreren der vorhergehenden Verfahrensansprüche auf einem Computer implementiert.

12. Datenträger, **gekennzeichnet durch** eine computerladbare Datenstruktur, die nach dem Laden auf den Computer das Verfahren nach einem oder mehreren der vorhergehenden Verfahrensansprüche implementiert.

## Claims

1. Device for playing back digitally stored audio and/or video information,
- with a controllable record player having a sound head,
- with a record which can be played back on the record player and which codes the information such that a segment on the record over which the sound head is situated can be determined on the basis of the information read by the sound head.
- with a playback control device, in particular a PC, which is connected with the record player,
and
which comprises means for decoding the information to determine the segments, and which has access to the digitally stored audio and/or video information, wherein functions of the playback control device for controlling the playback of the digitally stored audio and/or video information can be executed based on the decoded segments.

2. Device according to the preceding claim, **characterized by** a control for a playback speed module, a music archive selection unit and/or a programming unit for managing skip marks and/or a loading module for software modules and/or a managing unit for determining the length of audio loops and/or a parameter control module for a continuous modification in parameters, in particular audio effect parameters for volume, filter, flange, echo, delay and/or a playback control of video sequences and/or parameters of video sequences, in particular colour, resolution and/or a parameter control unit for positioning objects in computer games.

3. Device according to one or more of the preceding claims, **characterized in that** the control of the playback control device can be individually adapted by allocating functions to segments.

4. Playback control device for reproducing digitally stored audio and/or video information,
- with means which enable access to the digitally stored audio and/or video information,
- with interface means which enable a connection to a controllable audio and/or video data playback device, in particular record player, CD player, DVD player and/or minidisk player, on which special records provided with information patterns are played,
- with a storage area in which patterns are stored that can be individually associated with functions of the playback control unit, where the functions are intended for controlling of the playback of the digitally stored audio and/or video information,
- with means for comparing the patterns with information from the controllable audio and/or video data playback devices in which the allocated function is performed when a corresponding pattern is identified.

5. Playback control device according to the preceding claim, **characterized by** a control for a playback speed module, a music archive selection unit and/or a programming unit for managing skip marks and/or a loading module for software modules and/or a managing unit for determining the length of audio loops and/or a parameter control module for a continuous modifications in parameters, in particular audio effect parameters for volume, filter, flange, echo, delay and/or a playback control of video sequences and/or parameters of video sequences, in particular colour, resolution and/or a parameter control unit for positioning objects in computer games.

6. Playback control device according to one ore more of the preceding playback control device claims, **characterized in that** a PC with an interface for establishing a connection is program-controlled in such a way that it has the claimed functionality.

7. Method for controlling a playback control device, in particular a PC, wherein the playback control device comprises interface means which enable a connection to a controllable audio and/or video data playback unit, in particular a record player, CD player, DVD player and/or minidisk player, wherein
- in an initializing step information patterns are stored in a storage area, the information patterns being associated with functions of the playback control unit for controlling the playback of digitally stored audio and/or video information,
- in a further monitoring step, information provided by the controllable audio and/or video data playback devices is continuously read in order to compare it with the patterns, whereby the allocated function is being performed when a pattern is identified.

8. Method according to the preceding method claim, **characterized in that** the functions can be individually allocated to the patterns.

9. Method according to one or more of the preceding method claims, **characterized in that** there are functions which enable access to digitally stored information, in particular music information.

10. Method according to one or more of the preceding method claims, **characterized in that** a playback speed module, a music archive selection unit and/or a programming unit for managing skip marks and/or a loading module for software modules and/or a managing unit for determining the length of audio loops and/or a parameter control module for a continuous modification of parameters, in particular audio effect parameters for volume, filter, flange, echo, delay and/or a playback control of video sequences and/or parameters of video sequences, in particular colour, resolution and/or a parameter control unit for positioning objects in computer games, is controlled.

11. Software **characterized in that** it implements on a computer the method according to one or more of the preceding method claims.

12. Data carrier **characterized by** a computer-loadable data structure which, after it has been loaded onto the computer, implements the method according to one or more of the preceding method claims.

## Revendications

1. Dispositif de reproduction d'informations d'audio et/ou de vidéo enregistrées numériquement,
- ayant un tourne-disque commandable comprenant une tête de lecture,
- ayant un disque qui peut être joué sur le tourne-disque et qui code les informations de telle manière qu', à partir des informations lues par la tête de lecture, un segment peut être déterminé sur le tourne-disque au-dessus duquel se trouve la tête de lecture,
- ayant un dispositif de commande de reproduction, en particulier un ordinateur, qui est connecté au tourne-disque et
qui comprend le moyen destiné à décoder les informations pour déterminer les segments, et
qui a accès aux informations d'audio et/ou de vidéo enregistrées numériquement,
des fonctions du dispositif de commande de reproduction pour commander la reproduction des informations d'audio et/ou de vidéo enregistrées numériquement pouvant être effectuées à partir des segments décodés.

2. Dispositif selon la revendication précédente, **caractérisé par** une commande d'un module de vitesse de reproduction, une unité de commande de la sélection d'archives de musique, et/ou une unité de programmation pour la gestion de marqueurs de pistes, et/ou un module de chargement pour des modules de logiciels, et/ou une unité de gestion pour la détermination de la longueur de boucles audio, et/ou un module de commande de paramètres pour le changement continu de paramètres, en particulier des paramètres d'effets audio, tels que volume, filtre, flanger, écho, délai, et/ou une commande de la reproduction de séquences vidéo et/ou des paramètres de séquences vidéo, en particulier la couleur, la résolution, et/ou une unité de commande de paramètres pour le positionnement d'objets dans des jeux vidéo.

3. Dispositif selon l'une ou plusieurs des revendications précédentes, **caractérisé en ce que** la commande du dispositif de commande de reproduction peut être adaptée individuellement par l'attribution de fonctions à des segments.

4. Dispositif de commande de reproduction conçu pour la reproduction d'informations d'audio et/ou de vidéo enregistrées numériquement,
- ayant des moyens permettant un accès aux informations d'audio et/ou de vidéo enregistrées numériquement,
- ayant des moyens d'interface permettant une connexion à un dispositif de reproduction d'informations d'audio et/ou de vidéo commandable, en particulier un tourne-disque, un lecteur CD, un lecteur DVD, et/ou un lecteur minidisc, sur lequel sont joués des disques spéciaux dotés de motifs d'informations,
- ayant une zone de mémoire dans laquelle sont sauvegardés des motifs qui peuvent être combinés individuellement avec des fonctions du dispositif de commande de reproduction, les fonctions servant à commander la reproduction des informations d'audio et/ou de vidéo enregistrées numériquement,
- ayant des moyens destinés à comparer les motifs avec des informations des dispositifs de reproduction des informations d'audio et/ou de vidéo commandables, la fonction attribuée étant effectuée en cas d'identification d'un motif.

5. Dispositif de commande de reproduction selon la revendication précédente,
**caractérisé par** une commande d'un module de vitesse de reproduction, une unité de commande de la sélection d'archives de musique, et/ou une unité de programmation pour la gestion de marqueurs de piste, et/ou un module de chargement pour des modules de logiciels, et/ou une unité de gestion pour la détermination de la longueur de boucles audio, et/ou un module de commande de paramètres pour le changement continu de paramètres, en particulier des paramètres d'effets audio, tels que volume, filtre, flanger, écho, délai, et/ou une commande de la reproduction de séquences vidéo et/ou des paramètres de séquences vidéo, en particulier la couleur, la résolution, et/ou une unité de commande de paramètres pour le positionnement d'objets dans des jeux vidéo.

6. Dispositif de commande de reproduction selon l'une ou plusieurs des revendications précédentes concernant le dispositif de reproduction, **caractérisé en ce qu'**un ordinateur ayant une interface servant à l'établissement de la connexion est programmé de façon à comprendre la fonctionnalité revendiquée.

7. Procédé de commande d'un dispositif de commande de reproduction, en particulier d'un ordinateur, le dispositif de commande de reproduction comprenant des moyens d'interface permettant la connexion à un dispositif de reproduction d'informations d'audio et/ou de vidéo commandable, en particulier un tourne-disque, un lecteur CD, un lecteur DVD, et/ou un lecteur minidisc, dans lequel,
- dans une étape d'initialisation, des motifs d'informations qui sont combinés avec des fonctions du dispositif de commande de reproduction conçu pour commander la reproduction d'informations d'audio et/ou de vidéo enregistrées numériquement sont sauvegardés dans une zone de mémoire,
- dans une étape ultérieure de surveillance, des informations des dispositifs de reproduction d'informations d'audio et/ou de vidéo commandables sont lues de façon continue afin de les comparer avec les motifs, la fonction attribuée étant effectuée en cas d'identification d'un motif.

8. Procédé selon la revendication de procédé précédente, **caractérisé en ce que** les fonctions peuvent être attribuées individuellement aux motifs.

9. Procédé selon l'une ou plusieurs des revendications de procédé précédentes, **caractérisé en ce qu'**il existe des fonctions permettant un accès à des informations enregistrées numériquement, en particulier à des informations musicales.

10. Procédé selon l'une ou plusieurs des revendications de procédé précédentes, **caractérisé en ce qu'**un module de vitesse de reproduction, une unité de commande de la sélection d'archives de musique, et/ou une unité de programmation pour la gestion de marqueurs de pistes, et/ou un module de chargement pour des modules de logiciels, et/ou une unité de gestion pour la détermination de la longueur de boucles audio, et/ou un module de commande de paramètres pour le changement continu de paramètres, en particulier de paramètres d'effets audio, tels que volume, filtre, flanger, écho, délai, et/ou une commande de la reproduction de séquences vidéo et/ou des paramètres de séquences vidéo, en particulier la couleur, la résolution, et/ou une unité de commande de paramètres pour le positionnement d'objets dans des jeux vidéo sont commandés.

11. Logiciel, **caractérisé en ce qu'**il met en oeuvre le procédé selon l'une ou plusieurs des revendications de procédé précédentes sur un ordinateur.

12. Support de données, **caractérisé par** une structure de données qui peut être chargée sur un ordinateur et qui met en ouvre le procédé selon l'une ou plusieurs revendications de procédé précédentes avoir été chargée sur l'ordinateur.
